Europäisches Patentamt

European Patent Office

Office européen des brevets

(19)

(11) Numéro de publication: **0 1 1 2 1 9 3 B1**

(12) **FASCICULE DE BREVET EUROPEEN**

(45) Date de publication du fascicule du brevet: 31.07.85

(21) Numéro de dépôt: 83402011.7

(22) Date de dépôt: 14.10.83

(51) Int. Cl.⁴: **B 65 G 29/00, F 42 B 33/00**

(54) Machine de double traitement en continu de pièces de révolution, par exemple pour la fabrication de munitions.

(30) Priorité: 25.10.82 FR 8217794

(43) Date de publication de la demande: 27.06.84 Bulletin 84/26

(45) Mention de la délivrance du brevet: 31.07.85 Bulletin 85/31

(84) Etats contractants désignés: CH DE GB IT LI

(56) Documents cités:
FR - A - 2 463 081
US - A - 3 490 575

(73) Titulaire: **MANUFACTURE DE MACHINES DU HAUT-RHIN S.A. (MANURHIN), 10, rue de Soultz, F-68100 Mulhouse (FR)**

(72) Inventeur: **Rinck, Jean Charles, 25 Avenue Roger Salengro, F-68100 Mulhouse (FR)**
Inventeur: **Lecomte, Alain Michel, 30, Rue Daguerre, F-68100 Mulhouse (FR)**
Inventeur: **Scherrer, Alain, 64 rue de l'Espérance, F-68120 Pfastatt (FR)**

(74) Mandataire: **Martin, Jean-Jacques et al, Cabinet REGIMBEAU 26, Avenue Kléber, F-75116 Paris (FR)**

**Description**

L'invention concerne les machines de traitement de pièces en cinématique continue.

De telles machines servent en particulier à la fabrication en série de munitions. Une installation de fabrication de ce genre comporte une ou plusieurs chaînes de modules opérant chacune en cinématique continue; dans chaque chaîne, les pièces (ou ébauches de munitions) suivent un trajet continu, par l'intermédiaire de roues de transfert, entre différents barillets opératoires (c'est-à-dire chargés d'opérations d'usinage, de traitement ou de contrôle, par exemple). Des éléments d'installations en cinématique continue ont déjà été décrits dans les publications-brevets: FR-2 346 072, FR-2 356 464, FR-2 379 335, FR-2 376 049 et FR-2 459 196 pour ce qui est du module d'alimentation formant le point de départ d'une chaîne en cinématique continue; FR-2 333 412, FR-2 330 476, FR-2 475 946 et FR-2 463 081 pour des modules chargés de différentes opérations d'usinage de douilles de cartouche.

Certaines opérations d'usinage sont particulièrement délicates à traiter en cinématique continue. Il en est ainsi du vernissage ou encollage d'une douille, qui doit se faire sur deux parties opposées de celle-ci: d'une part au niveau de l'amorce, et d'autre part au niveau du collet de la douille, essentiellement à l'intérieur de celle-ci. Ces vernissages doivent être effectués en atmosphère propre. Pour l'amorce, le vernissage de son pourtour doit fournir un scellement étanche de l'amorce dans son logement. Pour le collet, le vernissage prépare un joint d'étanchéité souple pour la mise en place ultérieure de la balle. De plus, des séchages soignés des deux vernis sont à prévoir. Tout cela rend souhaitable de rapprocher les deux opérations de vernissage. Mais, bien qu'une utilisation multiple d'un même barillet opératoire ait déjà été envisagée, aucune solution véritablement satisfaisante n'a encore été apportée au problème pratique rencontré:

— réduire au maximum les risques d'incidents en cinématique continue, tout en conservant des organes mécaniques simples;
— disposer au niveau du barillet opératoire d'une place suffisante pour l'implantation des organes d'usinage ou de traitement et de leurs auxiliaires, sans augmenter à l'excès les dimensions de la machine.

Dans certains cas, comme celui du vernissage d'une douille, le problème se complique encore, car il faut en pratique retourner la douille entre les deux étapes du vernissage, tout en lui conservant un guidage convenable en cinématique continue, et ce compte-tenu de la conicité extérieure de la douille, de même que des différentes tailles de douilles à fabriquer.

La présente invention vient offrir un élément de chaîne de cinématique continue qui résolve les problèmes ci-dessus.

Pour résoudre le problème général exposé plus haut, l'invention propose un dispositif de traitement de pièces en cinématique continue, du type comprenant un barillet opératoire, apte à effectuer un traitement, des dispositifs de transfert amont et aval pour amener les pièces au barillet, et les y reprendre, respectivement, et un barillet de recyclage de pièces entre les dispositifs de transfert aval et amont, de sorte que les pièces peuvent passer plusieurs fois dans le même barillet opératoire, ainsi que des moyens d'amenée de pièces au dispositif de transfert amont et des moyens de reprise de pièces depuis le dispositif de transfert aval.

Ce dispositif offre la combinaison de moyens suivante:

— le barillet opératoire est agencé avec un premier et un second niveaux de circulation de pièces où sont effectuées deux opérations de traitement au moins en partie différentes, les postes de travail étant décalés d'une fraction de pas entre ces deux niveaux superposés,
— les dispositifs de transfert amont et aval comportent chacun une première et une seconde roues, également superposées, décalées de la même fraction de pas,
— les premières roues de transfert amont et aval coopèrent chacune avec le premier niveau du barillet opératoire, tandis que les secondes roues de transfert amont et aval coopèrent avec le second niveau du barillet opératoire,
— les moyens d'amenée de pièces coopèrent avec la première roue de transfert amont, tandis que les moyens de reprise de pièce coopèrent avec la seconde roue de transfert aval, ces deux coopérations se faisant au pas nominal, et
— le barillet de recyclage est agencé avec un changement de niveau pour faire passer les pièces de la première roue de transfert aval à la seconde roue de transfert amont.

Ceci permet à la fois d'utiliser des éléments simples au niveau des roues de transfert, avec des guidages sans aiguillage, tout en bénéficiant du décalage entre les deux niveaux du barillet opératoire pour implanter les organes d'usinage ou de traitement et leurs auxiliaires.

Très avantageusement, le second niveau est au-dessus du premier. Les barillets opératoires comportant souvent une descente du niveau des pièces, l'invention permet au contraire un rattrapage de niveau.

Très avantageusement, la fraction de pas est un demi-pas.

Dans un mode de réalisation particulier de l'invention, le barillet de recyclage porte chaque pièce par un organe de préhension apte à un mouvement vertical sur le rotor de barillet, en coopérant avec un profil de came hélicoïdal du stator de barillet.

Selon un autre aspect de l'invention, l'organe de préhension est en outre agencé pour pivoter autour d'un axe radial sur le barillet, de façon à retourner la pièce pendant le changement de niveau.

Dans un mode de réalisation particulier de ceci, le rotor de barillet comporte un rail formant support de coulissement vertical et agencé en crémaillère, et ledit organe de préhension est monté sur un bloc-pivot lié à une roue dentée engrenant sur ladite crémaillère.

De préférence, l'axe radial de pivotement est proche du plan horizontal médian entre les deux niveaux du barillet opératoire, le retournement des pièces se faisant autour d'un axe fixe, indépendamment de leur taille.

L'aspect ci-dessus de l'invention contribue à la solution des problèmes spécifiques des munitions, de même que les aspects ci-après. Comme les pièces, telles que des douilles de munition, sont de forme allongée conique, l'invention prévoit que les guidages des premier et second niveaux sont différents et adaptés compte-tenu du retournement des douilles.

Selon un autre aspect encore de l'invention, chaque niveau du barillet opératoire comporte, d'une part des postes de travail dont les logements de pièces sont définis par des rouleaux fous, et d'autre part, entre les postes de travail, un galet; une courroie fermée, entraînée, passe sur les galets et les pièces pour entraîner ces dernières en rotation sur elles-mêmes pendant leur traitement et leur mouvement en cinématique continue, les galets d'un niveau pouvant ainsi se loger au-dessus d'un poste de travail de l'autre niveau.

Plus particulièrement, les deux opérations de traitement sont le vernissage ou encollage du collet d'une part, de l'amorce d'autre part, d'une douille, ces deux opérations étant effectuées respectivement aux premier et second niveaux du barillet opératoire.

D'autres caractéristiques et avantages de l'invention apparaîtront à l'examen de la description détaillée qui va suivre ainsi que des dessins annexés, sur lesquels:

— la figure 1 illustre en vue de dessus le schéma de principe d'une chaîne de cinématique continue dans le cadre de laquelle on va décrire la présente invention;

— les figures 1A à 1D illustrent schématiquement en élévation les différentes roues et barillets de la figure 1;

— la figure 2 illustre la même séquence de cinématique continue que la figure 1, mais avec en plus les guides qui permettront la coopération des pièces avec les différentes roues et barillets;

— les figures 2A à 2C illustrent des vues partielles en coupe suivant la ligne A-B-C respectivement de la figure 2;

— la figure 3 est une vue agrandie d'une partie de la figure 2, cette partie comportant les éléments propres de la boucle de recyclage agencée selon la présente invention;

— la figure 4 est une vue en coupe d'un mode de réalisation particulier actuellement préférentiel du barillet opératoire BO de la figure 3;

— la figure 5 est une vue plus détaillée de la figure 4, dans la partie du barillet qui comporte les supports de pièces, tandis que la figure 5A illustre un détail d'un outil de travail coopérant avec l'un de ces supports de pièces; et

— la figure 6 est une vue en élévation et en coupe partielle du barillet de recyclage BR de la figure 3.

Un dispositif de cinématique continue étant difficile à décrire complètement autrement que par les dessins, les dessins annexés à la présente description sont à considérer comme incorporés à celle-ci, pour servir en tant que de besoin à la définition de l'invention.

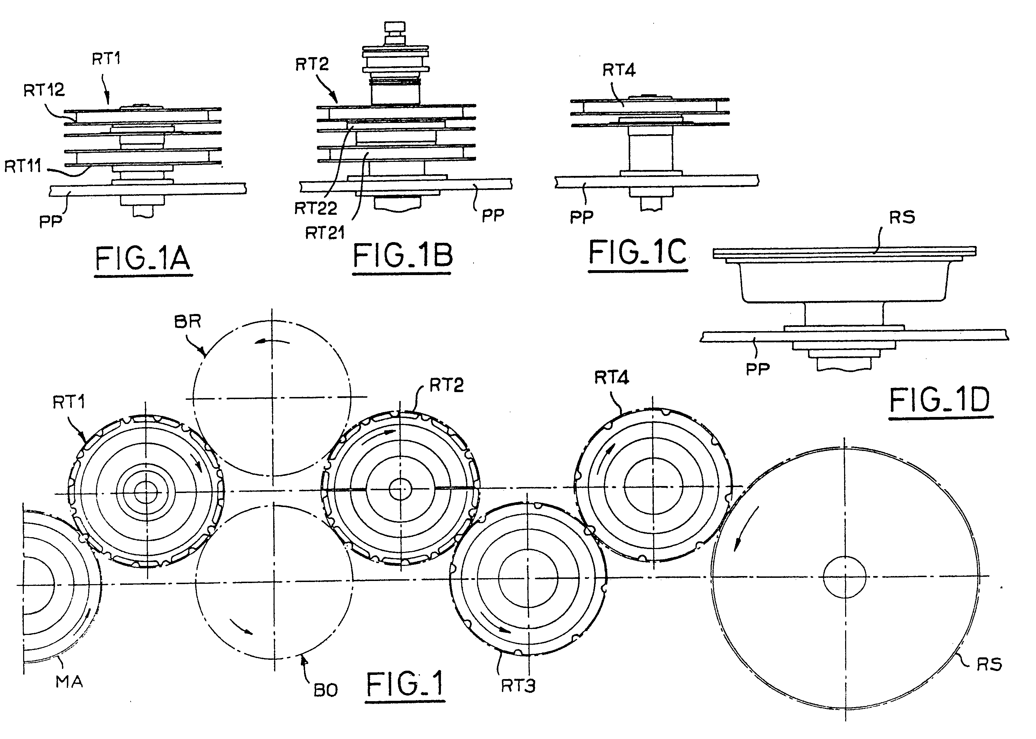

On considèrera tout d'abord la chaîne de cinématique de la figure 1.

Celle-ci comprend la sortie MA d'un module alimenteur, qui peut être par exemple du genre décrit dans l'une des publications-brevets déjà citées à ce propos. Ce dispositif d'entrée ou alimenteur MA est suivi d'une première roue de transfert notée RT1. Celle-ci coopère avec le barillet opératoire BO, qui coopère à son tour avec la seconde roue de transfert RT2, celle-ci coopérant maintenant avec un barillet de recyclage qui retourne vers la première roue de transfert RT1.

La seconde roue de transfert RT2 coopère également avec une autre roue de transfert RT3, suivie d'une roue RT4 qui peut être encore une roue de transfert ou par exemple un barillet de contrôle, pour aboutir enfin à une roue de sortie RS.

Ces différentes roues sont placées légèrement au-dessus d'un plan principal de travail, noté PP sur les figures 1A à 1D. Ces mêmes figures montrent sommairement en élévation la structure de chacune des roues. On y voit par exemple sur la figure 1A que la première roue de transfert RT1 comporte en fait deux étages de roues RT11 et RT12. La figure 1B montre qu'il en est de même pour la roue RT2 avec ses deux étages RT21 et RT22. Par contre, d'autres roues comme RT3 et RT4 ne comportent qu'un étage, de la manière illustrée sur la figure 1C.

On verra également plus loin que le barillet opératoire comporte lui aussi deux niveaux différents, tandis que de son côté le barillet de recyclage BR est capable de faire passer les pièces de l'un des niveaux de la roue de transfert aval RT2 à l'autre niveau de la roue de transfert amont RT1. En pratiques et de préférence, le barillet de recyclage prend les pièces au niveau inférieur de la roue RT2 pour la faire passer au niveau supérieur de la roue RT1.

Dans ces conditions, la roue d'amenée de pièces MA coopère avec la roue inférieure amont RT11, qui coopère avec le niveau inférieur du barillet opératoire BO. Après avoir fait une première opération de travail, celui-ci passe la pièce au niveau inférieur de la roue aval RT2. Le barillet de recyclage BR fait passer la pièce du niveau inférieur de la roue RT2 au niveau supérieur de la roue RT1. Ensuite, le barillet opératoire effectue sur son second niveau une seconde opération de traitement qui est au moins en partie différente de la première. Les pièces sont maintenant reprises par le niveau supérieur RT22 de la roue de transfert aval RT2, pour être ensuite transférées aux roues RT3 et RT4, qui se trouvent à hauteur du niveau supérieur comme l'indique la représentation des figures 1A à 1D.

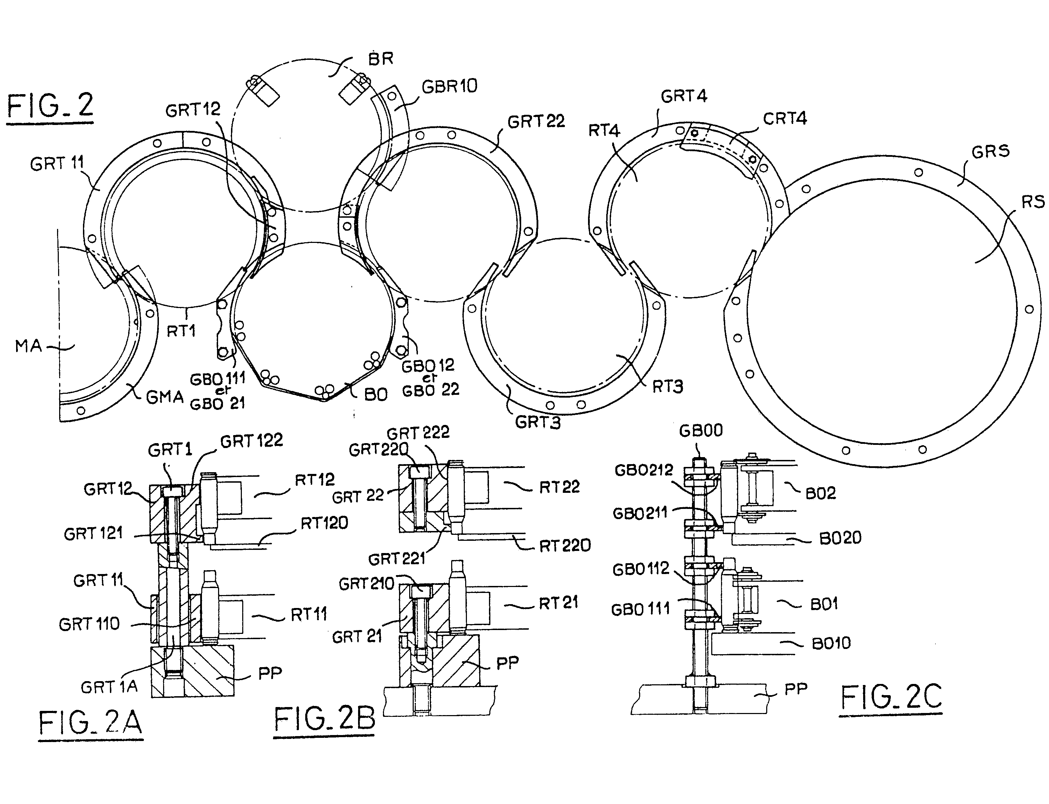

Sur la figure 2, les roues de la figure 1 ne sont plus illustrées que schématiquement par un trait d'axe périphérique, mais on a par contre fait figurer les moyens de guidage qui coopèrent avec ces roues pour assurer le déplacement des pièces à traiter, en l'espèce des douilles de munition, en cinématique continue.

Ainsi, la roue formant moyen d'amenée MA, coopère périphériquement avec un moyen de guidage GMA, qui va jusqu'au point de tangence de cette roue avec la roue suivante RT1, dénommée roue amont. Au moment où la pièce doit quitter la roue MA pour passer sur la roue RT1, elle est prise en charge par un moyen de guidage GRT11, associé à la partie inférieure RT11 de la roue amont RT1. Ce moyen de guidage GRT11 permet le transport des douilles jusqu'au moyen de guidage d'entrée GBO11 du barillet opératoire BO, à son niveau inférieur. Les pièces ou douilles sont maintenues sur le barillet opératoire BO sans nécessité de moyen de guidage, pour des raisons que l'on comprendra mieux plus loin.

Après la première opération de traitement, elles sont prises en charge par un moyen de guidage de sortie, GBO12 puis GRT21 invisible sur la figure 2, et qui les amène en relation de contact avec le moyen de guidage d'entrée GBR10 du barillet de recyclage BR. Les pièces sont alors encore au niveau inférieur. Le barillet BR les fait passer au niveau supérieur, où elles sont ramenées par un moyen de guidage analogue en relation avec la roue RT12, et son moyen de guidage GRT12. Les pièces transitent alors par un moyen de guidage GBO21 semblable au moyen de guidage GBO11 pour arriver vers le niveau supérieur du barillet de travail BO. Après la deuxième opération de travail et de traitement, les pièces passent par le moyen de guidage supérieur GBO22, pour être prises en charge par le moyen de guidage GRT22 au niveau supérieur RT22 de la roue de travail RT2. Après cela, tout se passe au niveau supérieur, et les pièces viennent sur le guide GRT3 de la roue RT3, puis sur le guide GRT4 de la roue RT4, ce guide étant dans l'exemple représenté interrompu en CRT4 pour permettre une opération de contrôle. Enfin, les pièces arrivent au niveau du guide GRS de la roue de sortie RS, où elles peuvent être triées en fonction du résultat du contrôle.

La figure 2A fait apparaître la structure en superposition des deux moyens de guidage associés à la roue amont RT1. Au niveau inférieur, on voit sur un axe GRT1, prolongé en GRT1A, pour venir se fixer sur le plateau PP, que le moyen de guidage inférieur GRT11 comporte une partie de section droite verticale légèrement conique qui coopère avec le côté de la douille. Celle-ci se trouve donc prise entre cette paroi GRT10 et la fourchette périphérique définie sur la roue RT11. Au niveau supérieur, le moyen de guidage GRT12 comporte une partie supérieure verticale GRT122, et une partie inférieure GRT121, qui est légèrement déportée axialement vers l'intérieur de la roue RT12. La fourchette périphérique de la roue RT12 coopère avec l'étui cylindro-conique de la douille, tenue de l'autre côté par le guidage GRT122. Le collet de la douille est tenu de son côté par le guidage GRT121, tandis que la douille repose sur un plateau-support RT120, qui en définit le positionnement vertical.

La figure 2B représente les guidages analogues, mais au niveau de la roue de transfert aval RT2, qui comporte deux niveaux RT21 et RT22, également en forme de fourchette périphérique sur lesquels la douille vient en appui respectivement collet en haut et collet en bas. Au niveau inférieur, la roue RT21 a sa fourchette périphérique en contact avec la partie cylindro-conique de la douille, partie qui est de l'autre côté en appui sur le guidage GRT21, fixé par un boulon GRT210 sur le plateau principal PP. Le culot de la douille repose sur ce même plateau PP. Au niveau supérieur, la fourchette périphérique de la roue RT22 coopère également avec la partie cylindro-conique de la douille, qui vient en apui sur la surface GRT222 du guidage GRT22 lequel est fixé par un boulon GRT220 sur une pièce solidaire du bâti, et définissant en GRT221 le guidage du collet de la douille. L'extrémité de ce collet s'appuie sur un plateau RT220. On voit donc que la structure est à peu près la même que pour la roue RT1, sauf que les deux organes de guidage sont montés séparément sur le bâti.

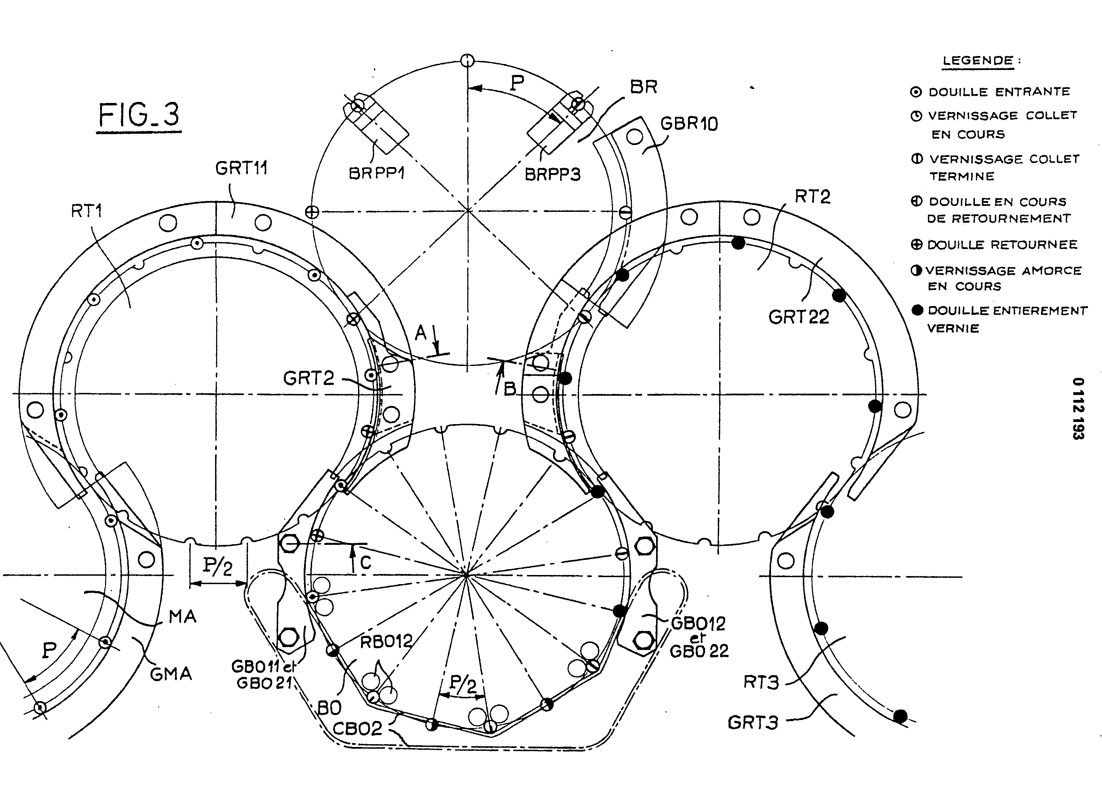

Enfin, la figure 2C vient préciser les guidages intervenant à l'entrée des deux étages du barillet opératoire, notés BO1 et BO2. Les guidages de sortie sont sensiblement les mêmes. On se rappellera que le barillet opératoire assure lui-même le maintien de la douille sur sa périphérique sans nécessité de guidages. L'ensemble des guidages illustré sur la figure 2C est solidaire d'un axe GBO0 monté sur le plateau PP. Au niveau inférieur, le guidage d'entrée est constitué de deux languettes GBO111 et GBO112, qui coopèrent respectivement avec la partie cylindro-conique de la douille et avec son collet. Sur la roue BO1, la douille est prise en appui sur deux galets montés mobile à rotation, contre lesquels elle est maintenue par une bande qui défile le long d'une partie de la périphérie du barillet, et se trouve entraînée en rotation par rapport à la roue BO1. On assure ainsi une rotation de la douille sur elle-même, comme décrit dans la demande de brevet FR-8 107 591. La figure 3 montre schématiquement la courroie CBO2 agissant au niveau supérieur du barillet opératoire.

Au niveau supérieur, le montage de la douille sur la roue BO2 est sensiblement le même. Mais cette douille coopère maintenant avec deux lan-

guettes de guidage GBO212 et GBO211, venant respectivement sur la partie cylindro-conique et sur le collet de la douille. Enfin, en partie basse le culot de la douille s'appuie sur une surface BO10, solidaire en rotation de la roue BO1. En haut, le collet de la douille s'appuie par son extrémité sur une surface BO20 solidaire en rotation de la roue BO2.

La description qui vient d'être donnée fait apparaître que les éléments utilisés au niveau des roues de transfert sont simples, avec des guidages sans aiguillages; par ailleurs, les guidages des premier et second niveaux peuvent avec cette disposition être différents et adaptés compte-tenu du retournement des douilles au niveau du barillet de recyclage, compte-tenu aussi de la forme en général cylindro-conique des douilles, et compte-tenu enfin du fait que la chaîne de cinématique continue a vocation souvent à traiter à des temps différents des douilles et des tailles différentes.

On se référera maintenant à la figure 3, qui permet de mieux comprendre le fonctionnement de la chaîne cinématique continue en recyclage. La figure 3 est donc limitée aux parties des figures 1 et 2 qui effectuent ce recyclage. Le moyen d'amenée MA comporte en périphérie, avec un pas périphérique noté P, des douilles dont le culot est en bas. Ces douilles sont représentées par un cercle marqué centralement d'un point. Les douilles ainsi défilantes au pas P vont quitter le guidage GMA pour arriver sur le guidage inférieur GRT11 de la roue de transfert amont RT1. Cette roue continue à faire transiter les douilles collet en haut, au pas P, pour les amener finalement à l'entrée du barillet opératoire BO à son niveau inférieur. On voit sur la figure 3 une douille non usinée arrivant collet en haut, juste au point de contact de la roue RT1 et du barillet opératoire BO à son niveau inférieur. Sur ce même niveau inférieur, la douille va subir un vernissage de son collet. Cette opération s'effectue au cours du passage sur le niveau inférieur du barillet opératoire. Le fait que l'opération de vernissage du collet est en cours est représenté par un trait selon un rayon dans le cercle qui représente la douille. Lorsque le vernissage du collet est terminé, le rond représentant la douille en section droite comporte un trait diamétral. La douille est alors prise par le guidage de sortie GBO12 du niveau inférieur du barillet opératoire. On notera à ce propos que tous les guidages d'entrée et de sortie du barillet opératoire sont associés aux galets de retour (non représentés) de la bande ou courroie CBO1 ou CBO2 passant le des douilles pour assurer leur rotation sur elles-mêmes pendant le vernissage. La douille transite alors brièvement par le niveau inférieur de la roue de transfert amont RT2, pour être prise par des pinces telles que BRPP1 et BRPP3, montées sur le barillet de recyclage BR. La préhension est aidée par le guidage d'entrée GBR10 du barillet de recyclage BR. Dans le mode de réalisation préférentiel de l'invention, ces pinces sont agencées pour retourner la douille sur elle-même. Le fait que l'opération de retournement est en cours, est représenté par un trait radial ajouté perpendiculairement au trait diamétral dans le rond représentant la douille. Lorsque la douille est complètement retournée, cela est représenté classiquement par deux traits diamétraux perpendiculaires dans le rond représentant les douilles. La douille est alors près de sortir du barillet de recyclage BR, mais cette fois-ci au niveau supérieur. Elle est prise en charge par le guidage GRT12 de la roue RT12 de transfert amont. On notera que cette reprise en charge s'effectue avec un décalage d'un demi-pas par rapport aux douilles qui étaient entrées à partir des moyens d'amenée MA. Les douilles ainsi retournées vont donc s'intercaler, en alternance, avec les douilles provenant de l'entrée. On réalise ici, en vue de dessus des roues de transfert RT1 et RT2, ainsi que du barillet opératoire BO, une cinématique continue qui se présente avec un pas apparent P/2. Les douilles retournées arrivent donc sur le moyen de guidage d'entrée GBO21 du niveau supérieur du barillet opératoire BO. Elles subissent la seconde opération de travail ou de traitement, qui est le vernissage de l'amorce. Le fait que cette opération de vernissage est en cours est représentée par un noircissement de la moitié de la section droite de la douille. Lorsque le vernissage est terminé, la douille est entièrement noircie en section droite. Elle va être reprise par le moyen de guidage de sortie supérieur GBO22, pour arriver vers le moyen de guidage GRT22 du niveau supérieur RT22 de la roue de transfert aval RT2. Au début de la roue de transfert aval RT2, les douilles se trouvent encore réparties au pas apparent P/2. Lorsque les douilles du niveau inférieur auront quitté la roue RT2, on retrouve le pas P, dans la partie droite de la figure 3, et les douilles sont alors normalement reprises par la roue de transfert RT3 également au pas P, ou par tout autre moyen de reprise des douilles.

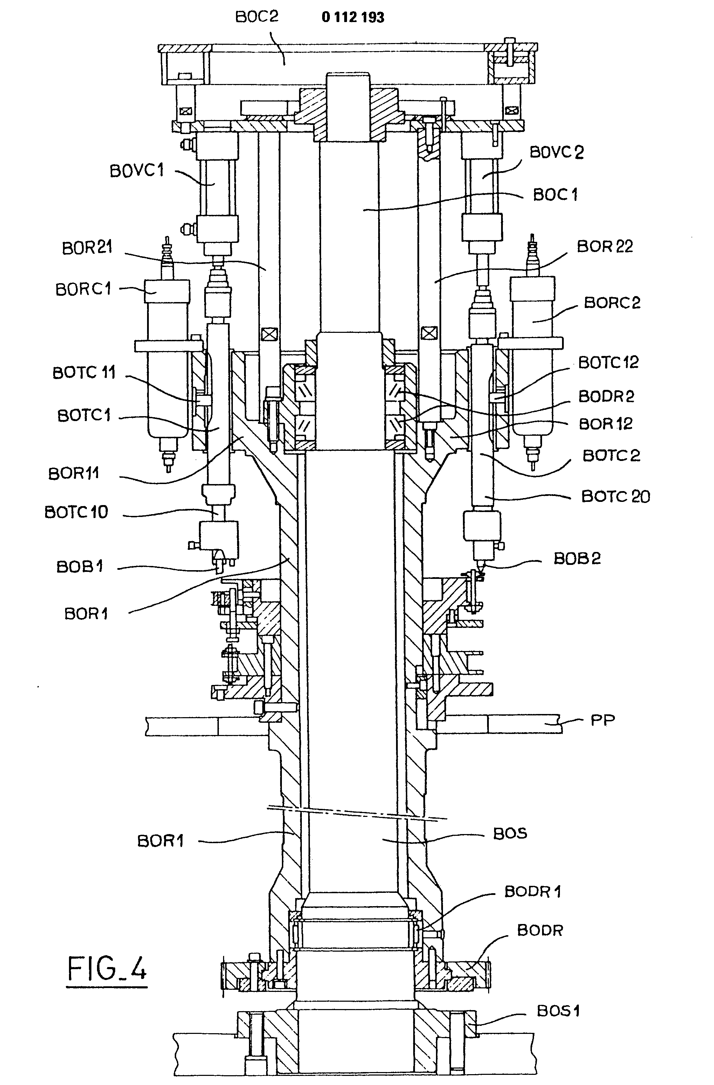

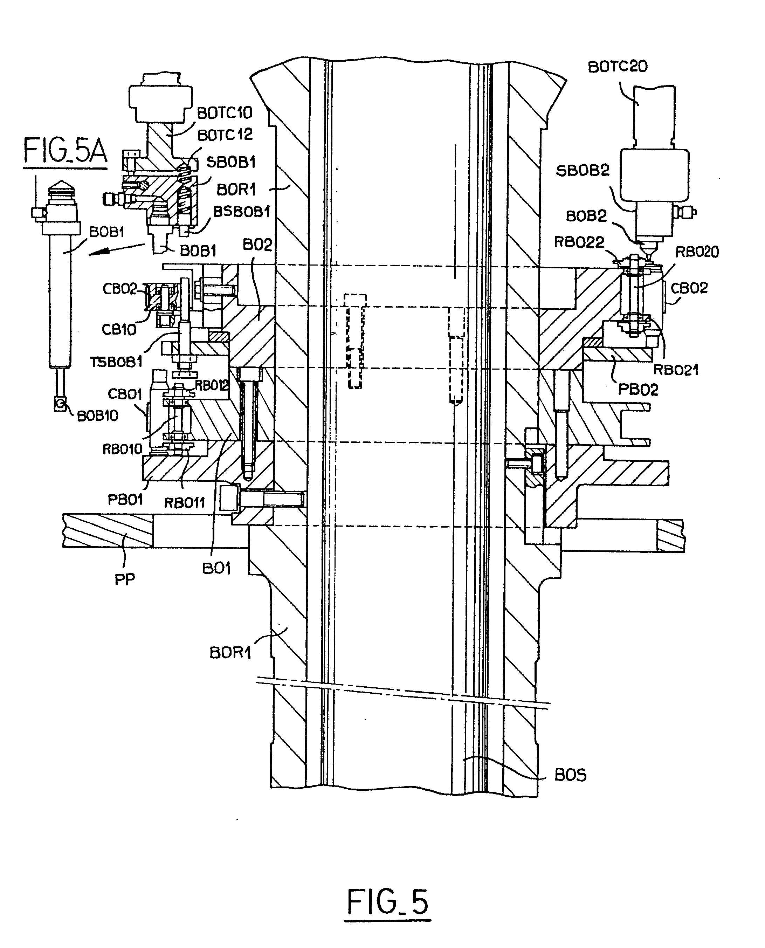

Pour faciliter la compréhension de l'invention, on décrira maintenant en référence aux figures 4 et 5 un mode de réalisation particulier et préférentiel du barillet opératoire BO.

Sur la figure 4, le barillet opératoire BO est fixé sur le bâti de la machine, lequel est solidaire du plateau principal PP. La partie fixe du barillet opératoire est notée BOS, et comporte une colonne centrale portant cette référence, pour se prolonger vers le haut par un axe BOC1, de section droite réduite. Ces parties fixes sont convenablement aménagées pour assurer une amenée des fluides nécessaires, en particulier à la lubrification et au vernissage, vers les parties tournantes du barillet opératoire. Cette amenée se fait notamment au niveau de la zone de coopération entre l'axe ou arbre BOC1 et le chapeau BOC2 du barillet opératoire. Ce chapeau BOC2, dont la structure n'est pas détaillée, supporte des vérins tels que BOVC1 et BOVC2, dont les tiges BOTC1 et BOTC2 sont mobiles à l'intérieur d'alésages ménagés dans les zones tournantes respectives BOR11 et BOR12. Les tiges BOTC1 et BOTC2 sont de plus munies d'échancrures coopérant avec des taquets radiaux BOTC11 et BOTC12 jouant le rôle d'arrêt en rotation. Les parties tournantes BOR11 et BOR12 qui sont en fait une même pièce en forme de couronne, sont reliées par des colonnes BOR21 et BOR22 à la partie inférieure de chapeau ou couvercle BOC2. Cet ensemble tourillonne autour du roulement BODR2 sur la partie basse de l'axe BOC1. Les organes BOTC10 et BOTC20 ainsi que BOB1 et BOB2 attachés en partie basse des tiges BOTC1 et BOTC12 seront décrits ci-après en référence à la figure 5.

On remarquera maintenant les réservoirs BORC1 et BORC2, qui servent de tampons pour contenir le fluide de vernissage, avant que celui-ci ne soit amené aux buses BOB1 et BOB2. L'arrivée du fluide de vernissage dans ces réservoirs est réalisée par des conduites souples, non représentées, et remontant jusqu'au chapeau BOC2, l'arrivée du fluide de vernissage se faisant par l'arbre comme précédemment indiqué.

En partie basse, la zone annulaire notée BOR11 et BOR12 se continue par un axe creux BOR1, formant le corps de rotor, et qui vient se supporter à pivotement en bs par un autre roulement BODR1 sur le stator BOS. Enfin, tout à fait en bas, on a noté en BODR la couronne dentée qui assure l'entraînement du rotor, tandis que BOS1 est la pièce de fixation du stator sur le bâti.

La figure 5 fait mieux apparaître la partie centrale du barillet opératoire sur la figure 4, et montre, fixées sur le rotor BOR1, une pièce inférieure PBO1, qui sert d'une part comme pièce d'appui pour les culots des douilles au niveau inférieur, et d'autre part à la fixation, superposée sur elle, en premier lieu de la roue inférieure BO1, et en second lieu de la roue inférieure BO2. La roue BO2 est à son tour solidaire d'une pièce PBO2, qui sert de support pour les extrémités des collets des douilles.

Les parties de la figure 5 qui ont déjà été décrites à propos de la figure 4 ne seront pas décrites à nouveau.

La roue inférieure BO1 présente, sur sa fourchette périphérique, des axes tels que RBO10, qui soutiennent des galets RBO11 et RBO12, disposés par paire autour de l'emplacement de la douille. Ainsi, la douille va venir s'appuyer sur les périphéries de deux paires de galets, comme on le voit en rapprochant la figure 5 de la figure 3. Enfin, les douilles sont enserrées contre les paires de galets par des courroies ou bandes notées CBO1 au niveau inférieur, et CBO2 au niveau supérieur. Ces courroies sont entraînées à une vitesse périphérique différente de la vitesse de rotation périphérique des roues BO1 et BO2, réalisant ainsi un entraînement en rotation des douilles sur elles-mêmes.

A la verticale de cette partie de la roue inférieure BO1, la roue BO2 comporte précisément un galet CB10, qui sert de support à la courroie CBO2, entre deux emplacements de douilles. A l'autre extrémité de la roue BO2, on voit un poste de support de douilles aménagé comme précédemment à l'aide d'un axe vertical RBO20 comportant deux paires de galets tels que RBO21 en bas et RBO22 en haut, ces galets assurant le soutien de la douille, tandis que celle-ci est entraînée en rotation par le courroie périphérique CBO2 qui passe sur la roue CB10 déjà citée. Il a déjà été cité que l'extrémité inférieure du collet de la douille repose ici sur un plateau PBO2. A l'opposé, le même plateau PBO2 sert de support à une tige TSBOB1, gui est ajustable en position axiale dans le sens vertical. L'extrémité libre de cette tige TSBOB1 est susceptible de venir en relation de contact avec une butée BSBOB1, qui fait partie du support SBOB1 de la buse BOB1 assurant le vernissage du collet. Cette buse est illustrée schématiquement sur la figure 5A, et comporte un orifice de pulvérisation BOB10, qui viendra normalement en relation de voisinage avec le collet de la douille, ladite buse BOB1 passant entre deux roues CB10, à l'intérieur de la bande CBO1, pour venir se placer par son orifice BOB10 au niveau du collet de la douille de la roue inférieure BO1. Le positionnement vertical est assuré précisément par la coopération de la butée BSBOB1 avec la tige TSBOB1 déjà citée. Pour le reste, la buse BOB1 vient se fixer comme indiqué par son extrémité en vue écorchée, notée BCB1 sur la figure 5, dont le support de buse est SBOB1. Celui-ci est monté à rotation sur un axe SBOB10, et ce support peut pivoter à l'encontre du rappel élastique défini en BOTC12, par rapport à l'extrémité BOTC10 assujettie à la tige BOTC1 de la figure 4. Le mouvement de pivotement du support SBOB1 est limité par une butée BOTC11 qui coopère avec ce support à l'opposé de la butée BSBOB1.

Le fonctionnement est simple: au cours de la rotation du barillet opération, la buse va descendre sous l'effet de la tige BOTC1 pour venir se placer avec précision au niveau du collet de la douille, d'une manière définie par la coopération de la butée BSBOB1 avec la tige TSBOB1, qui est de son côté solidaire des roues BO2 et BO1. On voit apparaître ici un avantage important de l'invention, à savoir qu'en bénéficiant du décalage entre les deux niveaux du barillet opératoire, on peut implanter ou faire passer de nombreux organes d'usinage ou de traitement, ici une buse de vernissage ou encollage, ainsi que leurs auxiliaires tels que la tige de butée TSBOB1, sans oublier les roues ou galets tels que CB10 qui forment renvoi pour les courroies périphériques assurant la rotation des douilles sur elles-mêmes.

Sur la partie droite de la figure 5, l'autre tige BOTC2 possède une extrémité BOTC20. Cette extrémité BOTC20 vient à son tour recevoir par filetage le support SBOB2 d'une buse BOB2 chargée du vernissage ou encollage de l'amorce de la douille. Plus simplement que la précédente, cette buse vient à l'extrémité de la douille pour déposer un revêtement de vernis ou colle au cours de la rotation de la douille autour de son axe longitudinal.

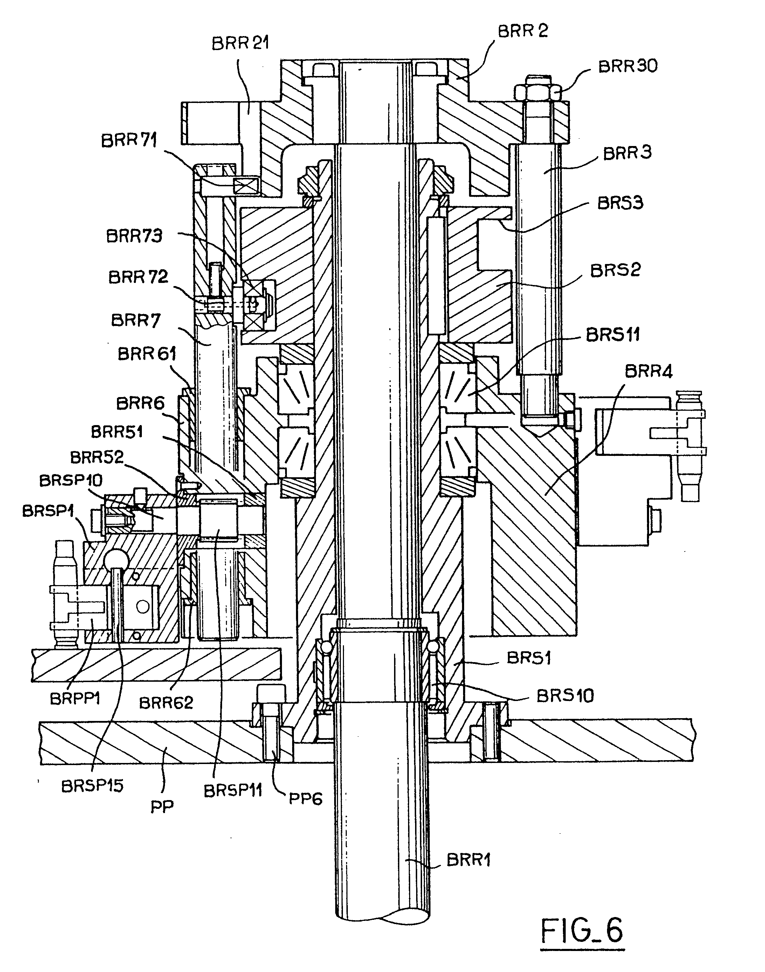

On décrira maintenant, en référence à la figure 6, la structure du barillet de recyclage BR. Ce barillet comporte comme le barillet opératoire en partie basse une roue d'entraînement, soidaire de son rotor BRR1, qui est ici l'axe central non creux. Cet axe BRR1 remonte jusqu'à la partie supérieure, où il entraîne une couronne notée généralement BRR2. En alternance, cette couronne reçoit une tige cylindrique telle que BRR3, formant support pour la couronne inférieure de rotor BRR4, laquelle tourillonne autour du stator BRS1 par l'intermédiaire d'un roulement BRS11. En partie basse, un autre roulement BRS10 est prévu entre le stator BRS1 et le rotor BRR1. On notera la fixation en PP6 du stator BRS1 sur le plateau principal PP de la machine.

En partie haute, le stator BRS1 comporte une zone en saillie BRS2, munie d'une rainure BRS3 qui définit un profil de came fermé permettant au galet BRR73 de réaliser un mouvement vertical alterné.

Comme précédemment indiqué, en alternance avec les colonnes telles que BRR3, le rotor supporte dans sa partie inférieure BRR4 des coulisseaux verticaus tels que BRR7, formant support de coulissement vertical. Chacun de ces coulisseaux comporte une tige transversale BRR72 formant axe pour un galet BRR73 qui s'engage dans la rainure BRS3 déjà citée. En partie haute, le coulisseau BRR7 comporte un doigt BRR71 qui s'engage dans un couloir vertical BRR21 convenablement ménagé dans le tête de rotor BRR2. En bas, le coulisseau BRR7 glisse dans les coussinets BRR61 et BRR62 de la partie BRR6 située à l'opposé de BRR4. Cette même partie comporte, légèrement décalé radialement par rapport à la colonne BRR7, un axe BRSP10, muni d'une couronne dentée BRSP11, qui vient engrener sur une crémaillère, non représentée, ménagée sur le coulisseau BRR7. On voit immédiatement qu'au cours de la rotation du barillet de recyclage, le coulisseau BRR7 va être soumis à un mouvement vertical, qui va centraîner une rotation de l'axe BRSP10 sur lui-même. L'axe BRSP10 entraîne alors à son tour un support de pince BRSP1, muni d'un logement traversé par un axe BRSP15, autour duquel est montée la pince proprement dite BRPP1, qui vient tenir la douille.

L'homme de l'art comprendra que le barillet de recyclage de la figure 6 est apte à assurer un changement de niveau de la douille, en même temps qu'un retournement de celle-ci. La partie gauche du barillet représente une douille dans la position d'entrée sur le barillet de recyclage, tandis que la partie droite représente la même douille dans la position de sortie du barillet de recyclage.

D'autres réalisations que celles de la figure 6 pourraient être utilisées pour le barillet de recyclage; on observa que dans ce mode de réalisation préférentiel, l'axe radial de pivotement des douilles peut être rendu proche du plan horizontal médian entre les deux niveaux BO1 et BO2 du barillet opératoire, le retournement des pièces se faisant alors autour d'un axe fixe, indépendamment de leur taille.

La description détaillée ci-dessus a été donnée dans le cas particulier du vernissage ou encollage des douilles, qui fait intervenir deux opérations à effectuer aux deux extrémités opposées de chaque douille. Cette application particulière a le mérite de bien faire apparaître les avantages de l'invention, compte-tenu des nombreux équipements et accessoires nécessaires pour le vernissage ou encollage au niveau du barillet opératoire inférieur. Un autre avantage apparaît au niveau des roues de transfert: celles-ci peuvent être réalisées pour fixation de deux roues standard l'une sur l'autre, avec un décalage angulaire correspondant à la fraction de pas précitée.

Cela étant, la présente invention n'est pas limitée au mode de réalisation décrit, mais s'étend à toute variante incluse dans le cadre des revendications ci-après.

**Revendications**

1. Dispositif de traitement de pièces en cinématique continue, du type comprenant un barillet opératoire (BO), apte à effectuer un traitement, des dispositifs de transfert amont (RT1) et aval (RT2) pour amener les pièces au barillet opératoire (BO), et les y reprendre, respectivement, et un barillet de recyclage (BR) de pièce entre les dispositifs de transfert aval (RT2) et amont (RT1), de sorte que les pièces peuvent passer plusieurs fois dans le barillet opératoire, ainsi que des moyens d'amenée de pièces (MA) au dispositif de transfert amont et des moyens de reprise de pièces (RT3) depuis le dispositif de transfert aval, caractérisé en combinaison par le fait:

— que le barillet opératoire (BO) est agencé avec un premier (BO1) et un second (BO2) niveaux de circulation de pièces où sont effectuées deux opérations de traitement au moins en partie différentes, les postes de travail étant décalés d'une fraction de pas entre ces deux niveaux superposés,

— que les dispositifs de transfert amont (RT1) et aval (RT2) comportent chacun une première (RT11, RT21) et une seconde (RT12, RT22) roues, également superposées, décalées de la même fraction de pas,

— que les premières roues de transfert amont (RT11) et aval (RT21) coopèrent chacune avec le premier niveau (BO1) du barillet opératoire, tandis que les secondes roues de transfert amont (RT12) et aval (RT22) coopèrent avec le second niveau (BO2) du barillet opératoire,

— que les moyens d'amenée de pièces (MA) coopèrent avec la première roue de transfert amont (RT11), tandis que les moyens de reprise de pièce (RT3) coopèrent avec la seconde roue de transfert aval (RT22), ces deux coopérations se faisant au pas nominal, et

— que le barillet de recyclage (BR) est agencé avec un changement de niveau pour faire passer les pièces de la première roue de transfert aval (RT21) à la seconde roue de transfert amont (RT12),

ce qui permet à la fois d'utiliser des éléments simples au niveau des roues de transfert, avec des guidages sans aiguillages, tout en bénéficiant du décalage entre les deux niveaux du barillet opératoire pour implanter les organes d'usinage ou de traitement et leurs auxiliaires.

2. Dispositif selon la revendication 1, caractérisé par le fait que le second niveau (RT12, BO2, RT22) est au-dessus du premier (RT11, BO1, RT21).

3. Dispositif selon l'une des revendications 1 et 2, caractérisé par le fait que la fraction de pas est un demi-pas.

4. Dispositif selon l'une des revendications 1 à 3, caractérisé par le fait que le barillet de recyclage (BR) porte chaque pièce par un organe de préhension (BRPP) apte à un mouvement vertical (BRR7) sur le rotor de barillet (BRR1—BRR6), et coopérant avec un profil de came hélicoïdal (BRS3) du stator de barillet (BRS1, BRS2).

5. Dispositif selon la revendication 4, caractérisé par le fait que l'organe de préhension (BRPP) est en outre agencé pour pivoter autour d'un axe radial (BRSP10) sur le rotor de barillet (BRR6) de façon à retourner la pièce pendant le changement de niveau.

6. Dispositif selon la revendication 5, caractérisé par le fait que le rotor de barillet (BRR6) comporte un coulisseau vertical (BRR7) et agencé en crémaillère, et que ledit organe de préhension (BRPP1) est monté sur un bloc-pivot (BRSP1) lié à une roue dentée (BRSP11) engrenant sur ladite crémaillère du coulisseau (BRR7).

7. Dispositif selon l'une des revendications 5 et 6, caractérisé par le fait que l'axe radial de pivotement (BRSP10) est proche du plan horizontal médian entre les deux niveaux (BO1, BO2) du barillet opératoire, le retournement des pièces se faisant autour d'une axe fixe, indépendamment de leur taille.

8. Dispositif selon l'une des revendications 5 à 7, dans lequel les pièces, telles que des douilles de munition, sont de forme allongée conique, caractérisé par le fait que les guidages des premier (GBO121, GBO122; GRT21) et second (GBO221, GBO222; GRT221, GRT222) niveaux sont différents et adaptés compte-tenu du retournement des douilles.

9. Dispositif selon l'une des revendications 1 à 8, caractérisé par le fait que chaque niveau (BO1, BO2) du barillet opératoire comporte, d'une part des postes de travail dont les logements de pièces sont définis par des rouleaux fous (RBO11, RBO12; RBO21, RBO22), et d'autre part, entre deux postes de travail, un galet (CB10), et qu'une courroie fermée (CBO1; CBO2), entraînée, passe sur les galets et les pièces pour entraîner ces dernières en rotation sur elles-mêmes pendant leur traitement et leur mouvement en cinématique continue, les galets d'un niveau pouvant ainsi se loger au-dessus d'un poste de travail de l'autre niveau.

10. Dispositif selon la revendication 9, caractérisé par le fait que les deux opérations de traitement sont le vernissage ou encollage du collet d'un part, de l'amorce d'autre part, d'une douille, ces deux opérations étant effectuées respectivement aux premier (BO1) et second (BO2) niveaux du barillet opératoire.

11. Dispositif selon la revendication 10, caractérisé par le fait qu'entre deux postes de travail du niveau supérieur (BO2) du barillet opératoire est prévue une butée (TSBOB1) formant référence de position pour l'opération effectuée au niveau inférieur (BO1) du barillet opératoire.

## Patentansprüche

1. Vorrichtung zur kontinuierlichen Behandlung von Gegenständen, mit einer für die Durchführung der Behandlung geeigneten Arbeits- bzw. Behandlungstrommel (BO), einer stromaufwärtigen (RT1) und stromabwärtigen (RT2) Transporteinrichtung für die Beförderung der Gegenstände zur Arbeits- bzw. Behandlungstrommel (BO) und deren dortige Wiederaufnahme, einer Trommel (BR) für die Rezirkulation der Gegenstände zwischen der stromabwärtigen (RT2) und stromaufwärtigen (RT1) Transporteinrichtung, derart, daß die Gegenstände die Arbeits- bzw. Behandlungstrommel mehrmals passieren können, einer Einrichtung (MA) für die Zuführung der Gegenstände zur stromaufwärtigen Transporteinrichtung und einer Einrichtung (RT3) für die Wiederaufnahme der Gegenstände an bzw. ab der stromabwärtigen Transporteinrichtung, gekennzeichnet durch die Kombination der Merkmale, daß die Arbeits- bzw. Behandlungstrommel (BO) mit einer ersten (BO1) und einer zweiten (BO2) Zirkulations- bzw. Umlaufstufe der Gegenstände ausgestattet ist, an welchem zumindest zwei teilweise unterschiedliche Behandlungsvorgänge durchgeführt werden, wobei die Behandlungs- bzw. Bearbeitungsstationen zwischen den zwei übereinanderliegenden Stufen um einen Teilschritt versetzt bzw. verschoben sind, daß die ersten Räder (RT11) für den stromaufwärtigen und (RT21) für den stromabwärtigen Transport jeweils mit der ersten Stufe (BO1) der Arbeits- bzw. Behandlungstrommel zusammenwirken, während die zweiten Räder (RT12) für den stromaufwärtigen und (RT22) für den stromabwärtigen Transport mit der zweiten Stufe (BO2) der Arbeits- bzw. Behandlungstrommel zusammenwirken, daß die Einrichtung (MA) für die Mitnahme bzw. Mitführung der Gegenstände mit dem ersten Rad (RT11) für den stromaufwärtigen Transport zusammenwirkt, während die Einrichtung (RT3) für die Wiederaufnahme der Gegenstände mit dem zweiten Rad (RT22) für den stromabwärtigen Transport zusammenwirkt, wobei die beiden zusammenwirkenden Vorgänge im Normalschritt erfolgen, und daß die Rezirkulationstrommel (BR) mit einer Stufenänderung bzw. Stufenverstellung ausgestattet ist, die einen Übergang der Gegenstände des ersten Rades (RT21) für den stromabwärtigen Transport auf das zweite Rad (RT22) für den stromaufwärtigen Transport bewirkt, wodurch baulich einfache Elemente für die Transporträder gleichzeitig mit Führungen ohne Weichenteile verwendet werden können, nämlich aufgrund der Verschiebung zwischen den beiden Stufen der Arbeits- bzw. Behandlungstrommel für den Einsatz der Bearbeitungs- oder Behandlungselemente und deren Hilfselemente.

2. Vorrichtung nach Anspruch 1, dadurch gekennzeichnet, daß die zweite Stufe (RT12, BO2, RT22) über der ersten (RT11, BO1, RT21) angeordnet ist.

3. Vorrichtung nach einem der Ansprüche 1 und 2, dadurch gekennzeichnet, daß der Teilschritt ein Halbschritt ist.

4. Vorrichtung nach einem der Ansprüche 1 bis 3, dadurch gekennzeichnet, daß die Rezirkulationstrommel (BR) jeden Gegenstand bzw. jedes zu behandelnde Stück durch ein Greiforgan (BRPP) trägt, das an dem Rotor (BRR1—BRR6) der Trommel eine vertikale Bewegung (BRR7) ausführen kann und mit einem schrauben- bzw. spiralförmigen Nockenprofil (BRS3) des Stators (BRS1, BRS2) der Trommel zusammenwirkt.

5. Vorrichtung nach Anspruch 4, dadurch gekennzeichnet, daß das Greifelement (BRPP) darüber hinaus so ausgelegt ist, daß dieses an dem Rotor (BRR6) der Trommel um eine radiale Achse (BRSP10) drehbar ist, derart, daß das zu behandelnde Stück bzw. der Gegenstand während des Stufenwechsels gewendet wird.

6. Vorrichtung nach Anspruch 5, dadurch gekennzeichnet, daß der Rotor (BRR6) der Trommel eine Gleitbacke (BRR7) aufweist, die vertikal angeordnet und mit einer Zahnstange versehen ist, und daß das Greiforgan (BRPP1) auf einem Drehblock bzw. Schwenkblock (BRSP1) montiert ist, der mit einem verzahnten Rad (BRSP11) verbunden ist, das mit der Zahnstange der Gleitbacke (BRR7) kämmt.

7. Vorrichtung nach einem der Ansprüche 5 und 6, dadurch gekennzeichnet, daß sich die radiale Drehachse (BRSP10) nahe der horizontalen Mittelebene zwischen den beiden Stufen (BO1, BO2) der Arbeits- bzw. Behandlungstrommel befindet, wobei der Wendevorgang der zu behandelnden Stücke bzw. Gegenstände unabhängig von deren Form bzw. Gestalt um eine feste Achse erfolgt.

8. Vorrichtung nach einem der Ansprüche 5 bis 7, bei welcher die Gegenstände, beispielsweise Geschoßhülsen, eine längliche konische Form aufweisen, dadurch gekennzeichnet, daß die Führungen der ersten (GBO121, GBO122; GRT21) und zweiten (GBO221, GBO222; GRT221, GRT222) Stufe unterschiedlich und dem Wendevorgang der Geschoßhülsen angepaßt sind.

9. Vorrichtung nach einem der Ansprüche 1 bis 8, dadurch gekennzeichnet, daß jede Stufe (BO1, BO2) der Arbeits- bzw. Behandlungstrommel einerseits Bearbeitungsstationen aufweist, deren Lager für die Gegenstände durch bewegliche Rollen (RBO11, RBO12; RBO21, RBO22) definiert bzw. begrenzt sind, und andererseits eine Rolle (CB10) zwischen zwei Bearbeitungsstationen und daß ein angetriebener geschlossener Riemen (CBO1; CBO2) über die Rollen und die Gegenstände geführt ist, so daß letztere während ihrer Behandlung und kontinuierlichen Bewegung aus eigenem Antrieb in Drehung gesetzt werden, wobei sich die Rollen einer Stufe mit einer Bearbeitungsstation der anderen Stufe überlagern können.

10. Vorrichtung nach Anspruch 9, dadurch gekennzeichnet, daß die Behandlungsvorgänge in der Lackierung bzw. in dem Schlichten des Halses einer Patronen- bzw. Geschoßhülse einerseits und deren Zündkapsel andererseits bestehen, wobei diese beiden Vorgänge jeweils in der ersten (BO1) und zweiten (BO2) Stufe der Arbeits- bzw. Behandlungstrommel ausgeführt werden.

11. Vorrichtung nach Anspruch 10, dadurch gekennzeichnet, daß zwischen zwei Bearbeitungsstationen der oberen Stufe (BO2) der Arbeits- bzw. Behandlungstrommel ein Anschlag (TSBOB1) vorgesehen ist, der die Bezugsposition für den Arbeitsvorgang bildet, der in der unteren Stufe (BO1) der Arbeits- bzw. Behandlungstrommel durchgeführt wird.

**Claims**

1. Apparatus for processing continuously moving workpieces, the apparatus being of the kind which has an operations drum (BO) for processing the workpieces; upstream transfer means (RT1) for conveying the workpieces to the operations drum (BO), and downstream transfer means (RT2) for recovering them from the operations drum (BO); a recycling drum (BR) for recycling the workpieces from the downstream transfer means (RT2) to the upstream transfer means (RT1) so that they can pass several times through the operations drum; as well as means (MA) for feeding the workpieces to the upstream transfer means, and means (RT3) for recovering them from the downstream transfer means; characterised by the following combination of features:

— that the operations drum (BO) has a first (BO1) and a second (BO2) level at which the workpieces circulate, the workpieces receiving at these two levels at least partly different treatments, the two treatments being applied at workstations superposed the one above the other and displaced, relative to each other, by a fraction of a step;

— that the upstream (RT1) and downstream (RT2) transfer means, each has a first (RT11, RT21) and a second (RT12, RT22) transfer wheel, the first and second transfer wheels being in each case superposed the one above the other and operationally displaced, relative to each other, by the same fraction of a step;
— that the first upstream and downstream transfer wheels (RT11 and RT21), each cooperates with the first level (BO1) of the operations drum, whereas of the second upstream and downstream transfer wheels (RT12 and RT22), each cooperates with the second level (BO2) of the operations drum;
— that the feeding means (MA) cooperates with the first upstream transfer wheel (RT11), the recovery means (RT3) cooperating with the second downstream transfer wheel (RT22), these two cooperations taking place at whole-step distances;
— that the recycling drum (BR) is constructed to shift the workpiece from the one level to the other in conveying it from the first downstream transfer wheel (RT21) to the second upstream transfer wheel (RT12),

these arrangements making it possible to use simple transfer wheels and guides without switchpoints, the relative displacements between the two levels of the operations drum facilitating the interposition of machining or processing devices and their auxilaries.

2. Apparatus as claimed in Claim 1, characterised in that the second level (RT12, BO2, RT22) is above the first (RT11, BO1, RT21).

3. Apparatus as claimed in either of Claims 1 or 2, characterised in that the fraction of a step is a half-step.

4. Apparatus as claimed in any one of Claims 1 to 3, characterised in that the recycling drum (BR) grips each workpiece by a grip (BRPP) which is capable of rising and descending (BRR7) vertically on the rotor (BRR1 to BRR6) of the recycling drum, cooperating with a helicoidal cam surface (BRS3) of the stator of the recycling drum (BRS1, BRS2).

5. Apparatus as claimed in Claim 4, characterised in that the grip (BRPP) is also arranged to pivot on a radical axis (BRSP10) on the rotor (BRR6) of the recycling drum, so as to reverse the workpiece in position during its change in level.

6. Apparatus as claimed in Claim 5, characterised in that the rotor (BRR6) of the recycling drum has a vertical slider (BRR7) equipped with a rack of teeth, the grip (BRPP1) being mounted on a pivoting block (BRSP1) connected to a toothed wheel (BRSP11) engaging with the teeth of the slider (BRR7).

7. Apparatus as claimed in either of Claims 5 and 6, characterised in that the radial pivot-axis (BRSP10) is near the horizontal plane half-way between the two levels (BO1, BO2) of the operations drum, so that the workpieces are always reversed in position by rotation on the same axis, irrespective of the size of the workpiece.

8. Apparatus as claimed in any one of Claims 5 to 7, in which the workpieces, such as ammunition cartridge cases, are elongated and conical in shape, characterised in that the guides at the first level (GBO121, GBO122; GRT21) and at the second level (GBO221, GBO222; GRT221, GRT222) are different, to agree with the reversal in position of the workpiece.

9. Apparatus as claimed in any one of Claims 1 to 8, characterised in that at each of its two levels (BO1, BO2) the operations drum has, on the one hand, workstations where workpiece is supported by freely rotating rollers (RBO11, RBO12, RBO21, RBO22) and, on the other hand, interposed between each two of these workstations, a guide-roller (CB10) for guiding an endless drive-belt (GBO1; GBO2) which drives the workpiece in rotation on its own axis during the treatment, while the workpiece continues on its translatory journey, so that each guide-roller at the one level can be situated above a workstation at the other level.

10. Apparatus as claimed in Claim 9, characterised in that of the two treatments, the one is the varnishing or gumming of the neck of the cartridge case, this being done at the first level (BO1), the other being the varnishing or gumming of the percussion cap, which is done at the second level (BO2) of the operations drum.

11. Apparatus as claimed in Claim 10, characterised in that between each two workstations of the upper level (BO2) of the operations drum there is a limit stop (TSBOB1) for positioning an operation at the lower level (BO1).

FIG. 1A

FIG. 1B

FIG. 1C

FIG. 1D

FIG. 1

FIG. 2

FIG. 2A

FIG. 2B

FIG. 2C

FIG_3

LEGENDE :

⊙ DOUILLE ENTRANTE

◔ VERNISSAGE COLLET EN COURS

◑ VERNISSAGE COLLET TERMINE

⊕ DOUILLE EN COURS DE RETOURNEMENT

⊕ DOUILLE RETOURNEE

◗ VERNISSAGE AMORCE EN COURS

● DOUILLE ENTIEREMENT VERNIE

0 112 193

FIG_4

FIG_5A

FIG_5

BRR 21
BRR 2
BRR 30
BRR 71
BRR 3
BRS 3
BRR 73
BRS 2
BRR 72
BRR 7
BRS 11
BRR 61
BRR 4
BRR 6
BRR 51
BRR 52
BRSP 10
BRSP 1
BRS 1
BRPP 1
BRR 62
BRS 10
BRSP 15
PP
BRSP 11
PP 6
BRR 1

FIG_6